# EUROPEAN PATENT SPECIFICATION

(11) **EP 0 821 642 B1**
(45) Date of publication and mention of the grant of the patent: **11.12.2002**
(21) Application number: 96901201.2
(22) Date of filing: 05.02.1996
(51) Int. Cl.: B29C 33/42, B29D 11/00, B29C 33/40

(54) **APPARATUS AND METHOD FOR MOULDING CONTACT LENSES**
VERFAHREN UND VORRICHTUNG ZUM FORMEN VON KONTAKTLINSEN
APPAREIL DE MOULAGE DE LENTILLES DE CONTACT ET PROCEDE CORRESPONDANT

(30) Priority: 03.02.1995 AU PN089395
(43) Date of publication of application: 04.02.1998
(73) Proprietor: Igel CM Laboratory Pte. Ltd., 02-24/31 Kallang, Singapore 1334 (SG)
(72) Inventor: Newman, Stephen, Springwood, QLD 4127 (AU); Noack, Donald, Springwood, QLD 4127 (AU)
(74) Representative: Jenkins, Peter David
(86) International application number: AU9600057
(87) International publication number: WO96023641

(56) References cited:
- EP-A- 0 618 063
- WO-A-93/04848
- US-A- 4 211 384
- US-A- 4 284 399
- US-A- 4 955 580
- US-A- 5 080 854

## Description

### BACKGROUND

The present invention relates to cast moulding of contact lenses using a two part moulding assembly. More particularly, the invention relates to an improved method of manufacturing contact lenses in a mould and an apparatus therefor.

Cast moulding of contact lenses is a commonly used method of manufacture due to its cost effectiveness.

### PRIOR ART

The basic known technique of cast moulding contact lenses involves the use of two complementary generally plastic mould parts one of which is generally convex and the other generally concave and which fit closely together to form a cavity in which a liquid state polymer is poured resulting in formation of a contact lens. According, to known techniques, prior to bringing the two mould parts together a polymerisable fluid moulding material is introduced into the cavity. The fluid moulding material conforms to the shape of the internal surfaces of the mould which bound and define a lens shaped cavity.

The moulds are brought together to accommodate shrinkage of the mould material and the contact lens is polymerised within the confines of the cavity formed by the two parts. Upon completion of polymerisation the two parts are separated to release the lens and then generally discarded.

Existing contact lens moulding techniques are disclosed for example in patent specifications GB2226977 by Galley and GB2235408 B by MJS Scientific. The latter patent discloses a known proposal for enabling the mould parts to approach one another to reduce slightly the thickness of the moulding cavity in order to accommodate shrinkage of the liquid material during polymerisation. One prior art apparatus uses a flexible lip on one of the mould parts to define the periphery of the moulding cavity. The lip flexes to accommodate shrinkage. The lip is not entirely satisfactory as it results in the productions of a lens of uncertain variation in the shape, edge or thickness of the lens.

Another method disclosed in specification GB2235408 utilities a pair of plastics mould parts which comprise concave and convex moulding surfaces with the periphery of the two moulding surfaces being defined by the abutment of a rigid annular projection on one of the mould parts with the convex or concave moulding surface of the other mould part. The idea behind the projection is that shrinkage of the polymerisable material during curing is at least partly compensated for by plastic flow of the annular projection allowing the two mould parts to approach one another more closely. Thus one or other or both of the moulds parts move axially.

An important characteristic of the prior art methodology is that one or other of the mould parts approach each other responsive to shrinkage of the polymerisable material during curing.

The Galley Patent GB 2226977 discloses a method for moulding contact lenses using a two part mould wherein the two parts are in slideable relationship between two moulding surfaces. The male or convex mould part has a shoulder that forms a slideable fit with a frusto-conical or cylindrical section within the female or concave mould part. According to this prior art methodology, as the lens material polymerises and shrinks, the male or convex mould part seals off against the frusto-conical or cylindrical section within the female or concave mould part. The method also involves use of an external hinge mechanism to facilitate axial movement. There are inherent disadvantages associated with this method and these are manifested in an irregular edge finish on the lenses produced by the method. This is due to the fact that the attempt to provide shrinkage compensation and control by use of thermo plastics and their intrinsic flow properties are not completely successful using this method.

According to the above methods, movement between the two mould pats is necessary to effect a satisfactory edge seal and as a means of counteracting the polymer shrinkage. Thus, one type of movement is slideable whilst the other is via a form of "creep" or plastic flow. Each method has unpredictable results especially concerning lens edge finish.

After initial sealing (during a long and protracted polymerising process) this method relies on the plastic flow of the annular projection to provide the mould parts with an avenue for further axial movement. During this progression towards each other the annulus is deformed permanently. The selection of plastics with specific properties and the use of subsequently linked polymerisation cycles would be essential to the success of this technique. The prior art lens designs were pre determined by the shape of the mould surfaces before the lens material was placed in the mould. The problem addressed by the present invention relates to the existing way in which polymer shrinkage within the prior art moulding apparatuses occurs.

The present invention therefore seeks to ameliorate or eliminate the above disadvantages by providing an improved method and apparatus for moulding contact lenses. The apparatus is capable of producing a more accurate contact lens than has previously been achieved or described. This is achieved by introducing into one or both of the mould parts a region or regions of flexure which region or regions compensate/s for shrinkage of the polymerisable material within the mould cavity. The shrinkage initiated flexing which takes place may not be equal in all meridians in that there may be flexing in the axial and radial directions.
US-A-4955580 discloses a lens moulding apparatus having the features of the precharacterising portion of claim 1.

US-A-4211384 discloses a moulding assembly for casting soft contact lenses.

In the broadest form of the apparatus aspect, the present invention provides a moulding apparatus for producing a contact lens according to claim 1, the apparatus comprising: a two part mould having a first convex moulding surface of a first mould part and a second concave moulding surface of a second mould part, the two surfaces together defining a sealed moulding cavity which receives a polymerisable material; characterised in that one or each of the first and second moulding surfaces include/s a region or regions wherein a part of the mould is flexible so as to accommodate shrinkage of the polymerisable material within the cavity but with minimal or no axial movement of the mould parts and wherein the region or regions is or are adapted to flex while ensuring that a constant lens edge thickness is maintained in a contact lens of polymerised material produced in the mold from the polymerisable material.
Preferably, the localised region comprises a built in area of flexure in the material of the mould parts so that the region on the mould where the flexure takes place is commensurate with the peripheral flange area of a lens. Preferably the mould parts other than the regions of flexure do not move as the flexing take place.

According to the method aspect, the present invention provides a method for moulding a contact lens according to claim 12 comprising the steps of: taking a lens moulding apparatus comprising two moulding parts; the first of which has a convex surface and the second of which has a concave surface, wherein one or each of the convex and concave surfaces together form a cavity and include/s a region or regions of flexure commensurate with the position of the flange of a finished lens; introducing into the cavity a polymerisable material in a fluid state; allowing the material to cure with the result that the material shrinks; retaining the relative positions of each part of the mould so that the shrinkage in the polymerisable material is accommodated by the regions of flexure in one or other of the parts of the mould; and removing the finished lens from the mould.

As the peripheral or carrier area of the mould is heated during polymerisation and is concurrently subjected to internal forces exerted upon it by the shrinkage of the contact lens material, it flexes to accommodate and to equilibrate with the conditions in the cavity.

The method described above improve the yields and quality of moulded lenses over and above lenses produced in accordance with prior art methodologies.

The present invention according to both its aspects will now be described in more detail according to preferred but non limiting embodiments and with reference to the accompanying illustrations, wherein:-
- Figure 1:: shows a cross sectional view of a lateral section of a two part mould according to one embodiment of the invention;
- Figure 2:: shows a cross sectional enlarged view of a lateral section of a two part mould according to another embodiment of the invention;
- Figure 3:: shows a cross sectional enlarged view of a lateral portion of a two part mould according to an alternative embodiment of the invention.
- Figure 4:: shows a cross sectional enlarged view of a lateral portion of a two part mould according to an other embodiment of the invention; and
- Figure 5:: shows a cross sectional enlarged view of a lateral portion of a two part mould with a region of flexibility in the convex part of the mould;
- Figure 6:: shows a further embodiment of the invention;
- Figure 7(a)-(c): shows further embodiments of the regions of flexure;
- Figure 8:: shows an alternative configuration for flex regions;
- Figure 9:: shows an alternative configuration for the flex regions; and
- Figure 10:: shows a further configuration of the flex region.

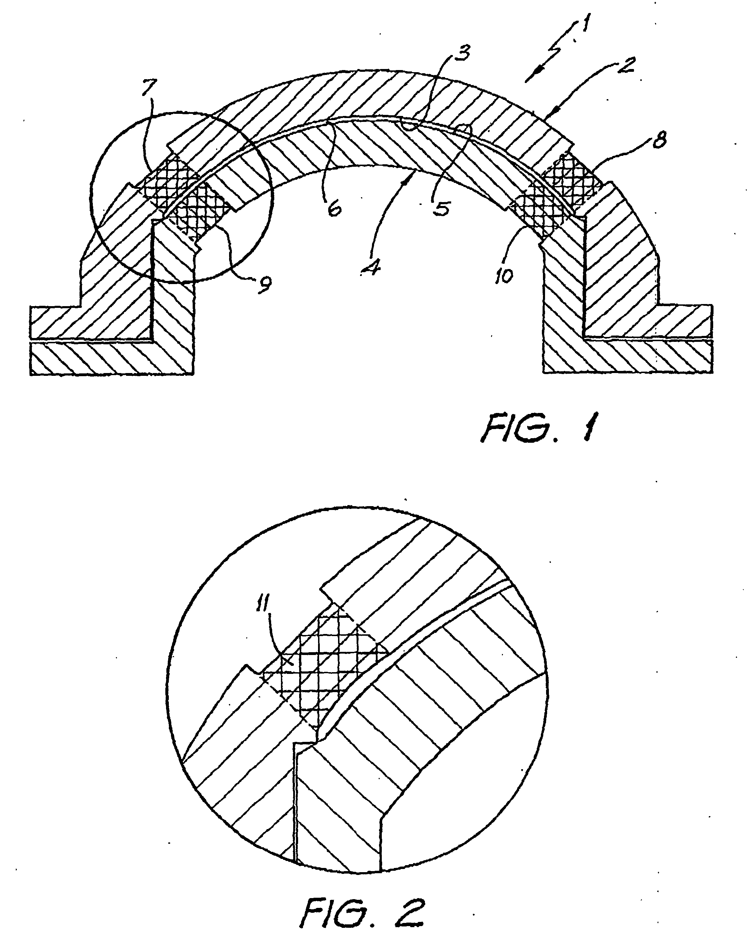

Referring to figure 1 there is shown a cross sectional view of a two part mould assembly 1 according to one embodiment of the invention. The mould assembly comprises two parts.

The first concave mould part 2 has a concave surface 3 and the second convex mould part 4 has a convex surface 5 which complements surface 3.

The mould parts are shaped to generally conform to the shape of a lens and when together form cavity 6. In the past any shrinkage of the polymerisable material was accommodated by axial displacement of one or other of the parts or by relative sliding of the parts. The apparatus in figure 1 includes in each part a region or regions of flexibility. Concave mould, part 2 has flexibility regions 7 and 8 and mould part 3 has flexibility regions 9 and 10.

The area immediately adjacent to the edge of a lens is called the flange or carrier area of the lens and is by itself an inconsequential part of the overall lens. It does however play a finite role in that it keeps the optical portion of the lens in close proximity to the cornea and connects it to the edge of the lens. It is there also to reduce the thickness of the lens for the comfort and ocular safety of the patient.

As the flange is merely a carrier and not an optical portion of the lens, its intrinsic surface geometry is at liberty to change slightly. During the polymerisation cycle therefore, this area of the mould is encouraged to "flex" or move. The mould is designed such that the flange area of the lens can change configuration as it is subjected to the above mentioned flexing. As this peripheral or carrier area of the mould is heated during polymerisation and is concurrently subjected to internal forces exerted upon it by the shrinking contact lens material, it flexes to suit and to equilibrate with the conditions within. As a consequence the flange area will change and depart in shape from its original form. The original form of the flange area may be spherical, conical, aspheric, etc.

The shrinkage of the lens in the mould is generally localised in or around the carrier zone and thus near the regions of flexure. There will still be some shrinkage of the polymer throughout the whole of the internal of the mould simply because the material is polymerising from a liquid to a solid and therefore must shrink overall. It is desirable that the mould walls in these shrinkage areas be able to move more than the remainder of the mould. The intention of this is to maintain absolute maximum shrinkage within the special flexure areas where the actual lens surface criteria and shape criteria are not quite as critical.

The area or areas of flexure are positioned on the surface of the lens mould(s) such that both the optical integrity and the fit of the lens remain intact. The preferred position therefore for these areas of flexure would be on the flange or carrier area of the lens. This however, is not to be construed as limiting of the possibilities for the positioning of the regions of flexure. The regions of flexure may also be moved to the optical region of the lens.

As the shrinkage of the polymer is of a volumetric nature a specific area of one or both of the mould parts (eg, the carrier area or flange area) can be engineered so that it will "follow" and take up the space resulting from the shrinkage of the polymer. The moulds are preferably formed in single pieces and the engineering of the flexure areas can be achieved by a controlled change in the mould parts wall thickness of differential curves and/or shape. Ideally the area/s of flexure of the mould is/are homogeneous with the remainder of the mould and are preferably manufactured from high grade polypropylene although other suitable materials may be used. A preferred embodiment is a "flat" section which interrupts the continuity of the male (or convex) mould although the flat section in this instance is flush with the surface of the mould.

This flat can be designed so that it describes a tangent between the male (or convex) portion of the mould optical area and its edge.

The outside wall of the mould can be shaped similarly or it can be configured in another form which complements, compensates for and/or controls the "flexing" action.

According to other embodiments the flexing region could employ non-spherical curves or any combination of curves, flats, sinks or non-spherical sections. The term sinks refers to a recess formed by the flexing zone. Such sinks, flats, and specialty areas should also be positioned such that no interference or degradation of the visual performance of the lens occurs.

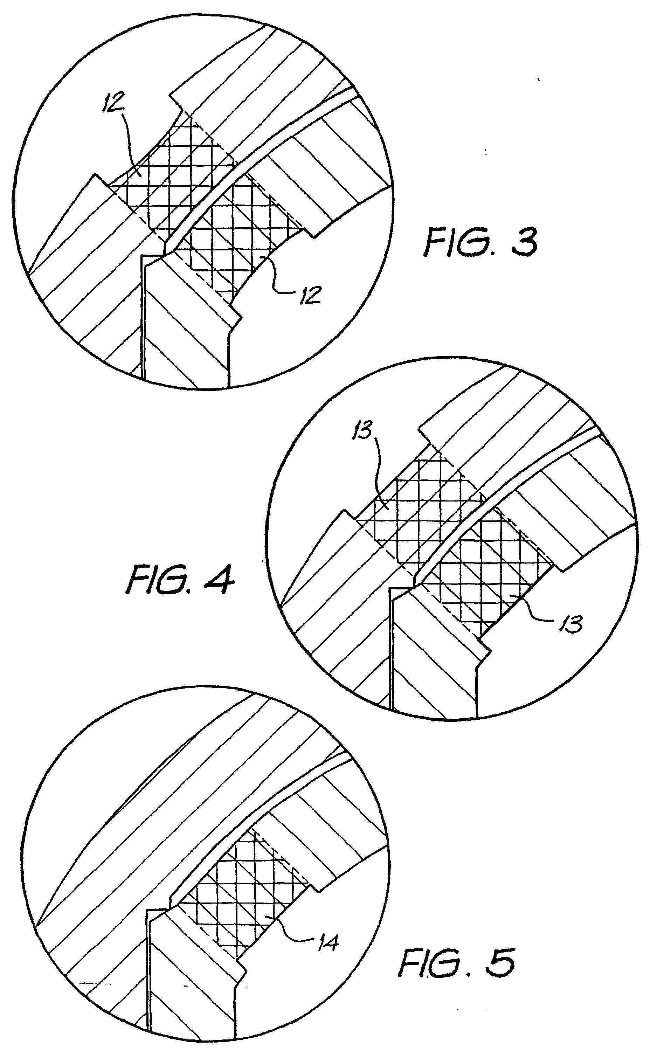

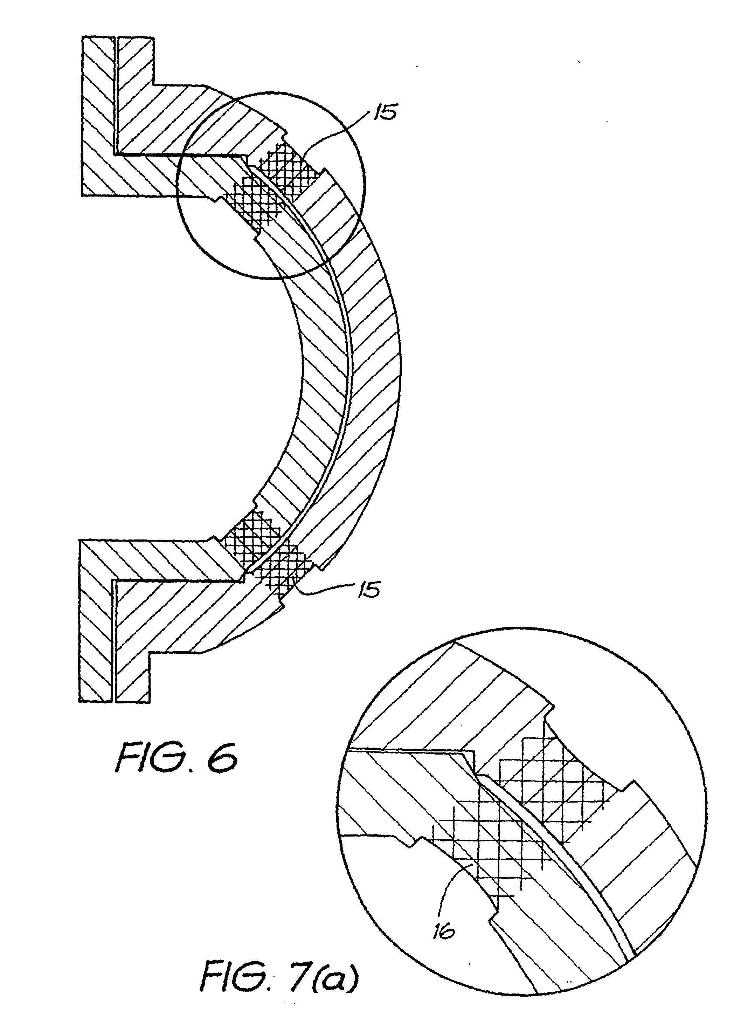

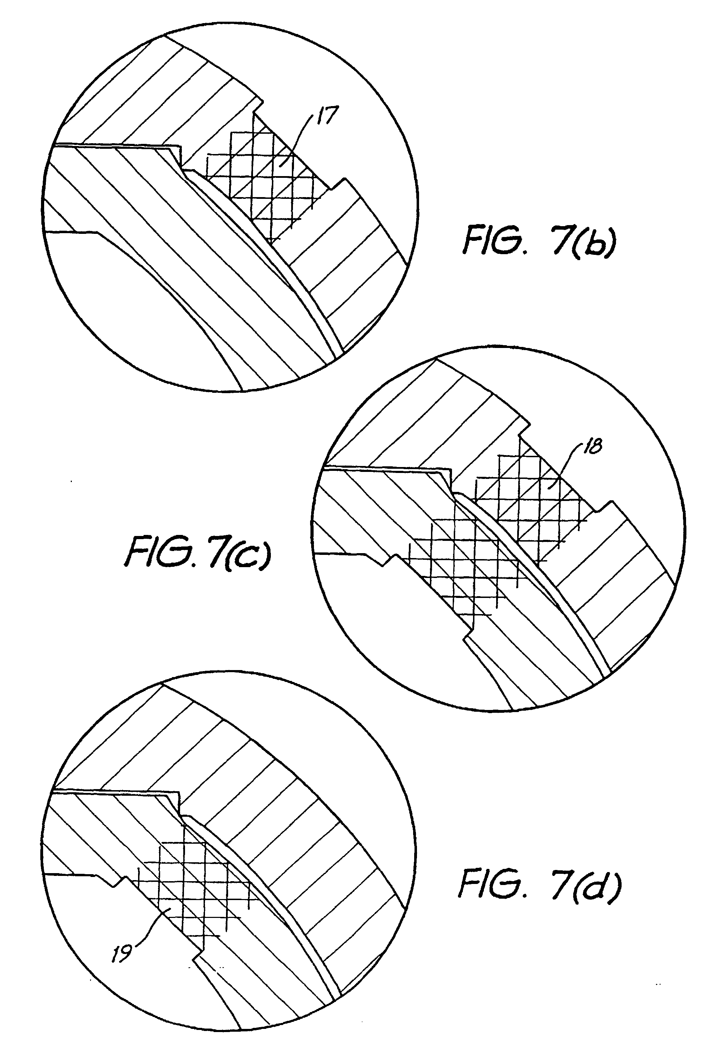

Figures 2 to 7(a)-(c) show a variety of embodiments of the regions of flexure in one or other of the mould parts. In the figures the flex region is numbered sequentially from with numerals from 11-19.

Whatever form the "flexing" area takes can be determined by factors such as the contact lens design, mould materials and moulding conditions. The purpose of this "flexible" section is to provide for an area of volumetric adjustment as the lens polymer shrinks during the polymerisation process.

The amount of "flex" is therefore tailored to create the optimum level of adjustment as the polymer shrinks. Preferably, the flexible area changes configuration and takes up the shrinkage amount of the polymerisable material and, when such changes and take up have taken place, creates a surface on the contact lens which is conductive to comfortable and practical wear. The means that the final post polymerised flange area is of a shape and thickness which will not preclude it from being used on an eye i.e. the flange area will not be too thin and the final curvatures will not allow normal fitting. When the polymer shrinks there is an intrusion into the moulding cavity via a flexing process. If a "normal" lens profile is required, a larger than necessary volume can be formed prior to polymerisation. This would then shrink down and the outside wall would flex to follow intrinsic shrinkage. This effect is analogous to placing a flexible membrane over a jar and then creating a negative pressure inside. Thus the membrane will flex and bow in to accommodate the reduction in volume within the jar. It will be recognised by those practiced in the art of moulding that numerous variations and permutations of this design and concept are possible.

Preferably there is some connection between the form of the flex area of the mould and the final shape of the lens required. This is so that the flexible area can be designed such that after flexing the final lens form will be approximately what the design intended. In other words the moulding process actually may create a lens shape which is not exactly that of the final form so that after flexing the final form is realised. This is not however, essential as the apparatus can be arranged so that the lens shape moves in a predominantly linear fashion inwards towards the mould surface itself so that the form may change very little.

It is also possible to create shapes which are not similar to the final form required. This can be achieved by varying the thickness of the flexure area across its chord and/or a combination of shape difference and contour thickness.

The possible shape and contours of the flexing regions will cover spherical curves through to flats through to aspheres, to combinations of sphero-aspheres or flat aspheres. The contours of the flexing region will reflect the general form itself, therefore if it is a convex part of the mould, the shape will generally be convex, if it is a concave part of the mould the shape will generally be concave. The final flexure form will be determined by the end result required in the final mould form.

The criteria as specified for lens design will be determined by the designers shape of curvature and/or shape affects in the peripheral area of the lens. If a generally aspherical shape is required on the periphery of the lens, either on the anterior or the posterior surface of the lens, the flexure area will reflect generally this sort of shape.

The flexure area will act something like a bellows. In other words, it will transport the optical area (the remaining area of the mould) either on the posterior or the anterior surface of the mould. It would allow a constant form to move in and out of a linear plane. That then enables the optic zone and/or the remaining area around the optic zone prior to the flexure area to flex less or distort less, because there is going to be a greater area of flexure just outside of that. This will allow the optic zone portion and the residual around it to maintain its form more accurately than if it were to shrink overall. It also allows the mould form to be kept shut from the initial insertion from the male part into the female part. It allows provision for a constant edge thickness and then it allows the judicious manipulation of the flexure areas to control the centre thickness and the optical positioning.

According to the prior art the moulds are allowed to move towards each other. Some practitioners place weights on the mould to help this happen. Others allow the male mould to move towards the female mould under the influence of the actual polymer shrinkage.

According to the invention the mould can be completely closed and allow the flexure areas to control and influence lens mononer shrinkage. Whether this is purely the flexure area independent of the rest of the mould or whether it is a combination of flexure area and/or the optical portion of the mould is dependent upon the results desired. The critical factor is that specific flexure areas can be chosen and designed to dictate which part moves and how much. This will give accurate and consistent control over centre thickness, optical quality and edge thickness.

The flexure effect upon the lens has no consequence for fitting or comfort if designed and implemented so that post "flexed" curves have been optimised.

A flat surface may end up as a curve and an aspheric surface may end up as flat. This illustrates that the flex area of the mould can be of an arbitrary form prior to polymerisation provided it assumes the final shape required. For example, a flat section may end up being a curve once polymerisation has taken place and the material has drawn in the "flex" section. The amount of flex in the flexing regions is tailored or controlled to create the optimum level of adjustment as the polymer shrinks.

The specific tailoring required for differing situations can be accomplished by varying the width, wall thickness and shape of the "flexing areas" on the mould. Once an optimum level of flexing is achieved for a given lens type and parameter it is relatively static for following lenses. This is again, one of the advantages of moulding lenses in this way.

The permutations of the invention are numerous and may vary according to lens design requirements. What characterises this invention is that the lens polymer shrinks to its final form whilst the moulding cavity remains sealed and static or relatively static. The special areas which can flex concurrently with the polymer shrinkage preclude the mould from having to have any other, more dynamic, mechanisms in place. Therefore the optic zone and edge thickness and its centre thickness can be maintained at an optimum level of accuracy and reproducibility.

According to the apparatus aspect one advantage of the invention is the capacity of the mould to be closed and cured and the only specific shrinkage that is going on (other than the normal axial and linear shrinkage associated with this type of manufacture) is such that it cannot effect the centre thickness or the optic zone. This would require two moulds to be moved against one another according to conventional methodology.

The flexing according to the invention is far more controllable than prior art sliding and will remain so mould after mould. Any variance in closing pressure for a slideable fit moulding until will result in inconsistencies in centre thickness.

The apparatus of the invention is more controllable than prior art sliding because when the two parts are slid together there is the possibility of the moulds getting tilted off axis to each other. There is also the possibility of the sliding not occurring as much or too much, therefore causing problems with the edge thickness, centre thickness and/or optical quality.

Sliding of the mould parts detracts from the consistency of the polymer in the lens itself in the lens form. This can lead to handling inconsistencies and material strength and modulus inconsistencies. According to the invention the mould is shut at initial stage when the polymer is liquid and then as it shrinks, the flexible areas will allow the take up of space which is inevitable but will take them up within the mould form itself, thus it acts as an internal movement as opposed to an external movement. This is far more controllable than the prior art produced lenses.

Once the mould according to the present invention is closed it requires no further axial pressure to ensure it remains that way. Any further movement axial or otherwise is as a result of overall mould shrinkage (predictable) and controlled flexing (also predictable).

The edge profile and thickness will also be optimised, as inconsistencies caused by mould to mould movement will be eliminated as that movement will only be confined to the regions of flexure. This design therefore will improve yields and form accuracy in the process of contact lens moulding as it provides for the most stable and consistent moulding environment yet.

Figures 1 to 7(a) - (c) show various embodiments of the apparatus aspect of the invention wherein each of the profiles of the mould apparatus shown include a region of flexing.

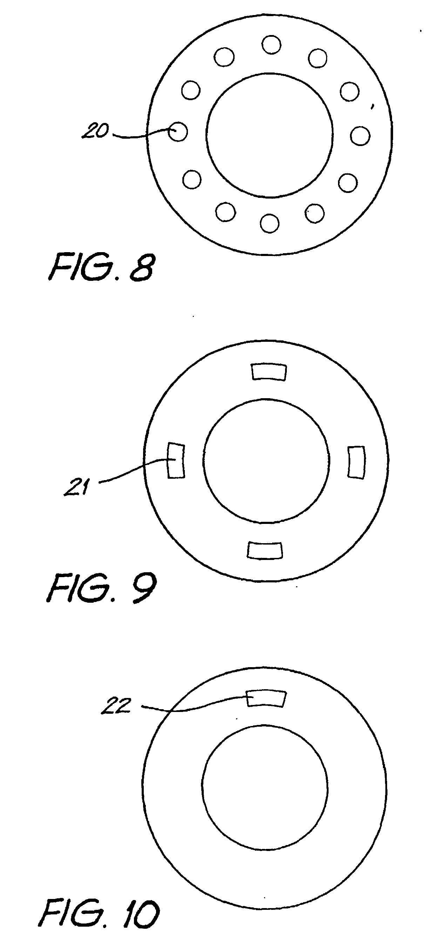

Figures 8, 9 and 10 show alternative configurations for the regions of flex. The flexure regions do not need to be circumferential. There may be iso-pocketing, non-circular wedges or localised areas anywhere in the lens outside of the optics. Figure 8 shows circumferential circular flex regions 20, figure 9 shows circumferentially disposed individual square flexure regions 21 and figure 10 shows a flex region 22.

It will understood that the flexing region may be placed at any point along the mould part contour and there may be more than one flexing region. In the flexing region the flexure does not necessarily have to be constant over the total region of flex. In fact, it may be a variable flexure over the region of flex with maximum flexing occurring within the centre of the flexible area and the least amount towards the thicker wall areas of the main part of the mould.

The mould parts are held in close apposition to each other during the moulding process by surface tension and the close proximity of the female mould wall to the male mould wall. The inherent surface tension of the fluid between these two parts allows for quite a strong bonding. The material within the mould that is the polymer as it starts to set off and polymerise will further help to maintain the mould parts in close apposition.

## Claims

1. A moulding apparatus for producing a contact lens the apparatus comprising:
a two part mould (1) having a first convex moulding surface (5) of a first mould part (4) and a second concave moulding surface (3) of a second mould part (2), the two surfaces (5,3) together defining a sealed moulding cavity (6) which receives a polymerisable material;
**characterised in that** one or each of the first and second moulding surfaces (5,3) include/s a region or regions (7,8,9,10) wherein a part of the mould is flexible so as to accommodate shrinkage of the polymerisable material within the cavity but with minimal or no axial movement of the mould parts (2,4) and wherein the region or regions (7,8,9,10) is or are adapted to flex while ensuring that a constant lens edge thickness is maintained in a contact lens of polymerised material produced in the mold (1) from the polymerisable material.

2. A lens moulding apparatus according to claim 1 wherein the region/regions (7,8,9,10) of flexure is/are located in that part of the mould (1) which is at or near the peripheral flange area of the lens.

3. A lens moulding apparatus according to claim 1 wherein the region/s (7,8,9,10) of flexure is/are located in that part of the mould (1) which is at or near the optical region of the lens.

4. A lens moulding apparatus according to claim 2 or claim 3 wherein the regions (7,8,9,10) of flexure are homogenous with the mould parts.

5. A lens moulding apparatus according to claim 4 wherein the regions (7,8,9,10) of flexure are positioned on the surface of the lens mould parts (2,4) and whose surface/s is/are either flush with the remainder of the mould surface or not in alignment with the mould surface.

6. A lens moulding apparatus according to claim 5 wherein the flexure may vary over the region/s (7,8,9,10) of flexure.

7. A lens moulding apparatus according to claim 6 wherein the region/s (7,8,9,10) of flexure are shaped to accommodate spherical curves, flats, sinks aspheres sphero-aspheres or flat aspheres.

8. A lens moulding apparatus according to claim 7 wherein the form of the flexure region/s (7,8,9,10) influence the shape of the lens produced from the mould.

9. A lens moulding apparatus according to claim 8 wherein the flex areas take up lens shrinkage within the mould independent of the remaining areas of the mould parts (2,4).

10. A lens moulding apparatus according to claim 9 wherein the regions (7,8,9,10) of flexure are manufactured from high grade polypropylene.

11. A lens moulding apparatus according to claim 10 wherein the shape/s of the region/s (7,8,9,10) of flexure dictate the shape on the peripheral area of the lens.

12. A method for moulding a contact lens comprising the steps of:
a) taking a lens moulding apparatus comprising two moulding parts (4,2); the first (4) of which has a convex surface (5) and the second (2) of which has a concave surface (3), wherein one or each of the convex and concave surfaces (5,3) together form a cavity (6) and include/s a region or regions (7,8,9,10) of flexure commensurate with the position of the flange of a finished lens;
b) introducing into the cavity (6) a polymerisable material in a fluid state;
c) allowing the material to cure with the result that the material shrinks;
d) retaining the relative positions of each part (4,2) of the mould (1) so that the shrinkage in the polymerisable material is accommodated by the regions (7,8,9,10) of flexure in one or other of the parts (4,2) of the mould; and
e) removing the finished lens from the mould.

13. A method according to claim 12 wherein the region/regions (7,8,9,10) of flexure is/are on the mould part (4,2) at a location which is commensurate with the peripheral flange area of the lens.

14. A method according to claim 13 wherein the mould parts (4,2) are held in close apposition to each other during the moulding process by surface tension and the close proximity of the concave mould wall to the convex mould wall.

15. A method according to claim 14 wherein the peripheral or carrier area of the mould is heated during polymerisation and is concurrently subjected to internal forces exerted upon it by the shrinkage of the contact lens material.

16. A method according to claim 15 wherein the mould parts (4,2) are held in close apposition to each other during the moulding process by surface tension.

## Patentansprüche

1. Formvorrichtung zum Herstellen einer Kontaktlinse, wobei die Vorrichtung aufweist:
eine zweiteilige Form (1), die eine erste, konvexe Formoberfläche (5) aus einem ersten Formteil (4) und eine zweite konkave Formoberfläche (3) aus einem zweiten Formteil (2) hat, wobei die beiden Oberflächen (5, 3) zusammen einen abgeschlossenen Formhohlraum (6) definieren, der ein polymerisierbares Material aufnimmt;
**dadurch gekennzeichnet, daß** eine oder jede der ersten und zweiten Formoberflächen (5, 3) einen Bereich oder Bereiche (7, 8, 9, 10) aufweist/aufweisen, in denen ein Teil der Form biegbar ist, um einen Schwund des polymerisierbaren Materials innerhalb des Hohlraums aufzunehmen, jedoch mit minimaler oder keiner axialen Bewegung der Formteile (2, 4), und wobei der Bereich oder die Bereiche (7, 8, 9, 10) so ausgelegt ist oder sind, daß sie sich biegen, während sichergestellt ist, daß eine konstante Linsenranddicke aufrechterhalten ist in einer Kontaktlinse aus polymerisiertem Material, die in der Form (1) aus dem polymerisierbaren Material hergestellt wird.

2. Linsenformvorrichtung nach Anspruch 1, bei welcher der Bereich/die Bereiche (7, 8, 9, 10) der Biegung in dem Teil der Form (1) vorgesehen ist/sind, der bei oder nahe bei dem umfänglichen Flanschbereich der Linse ist.

3. Linsenformvorrichtung nach Anspruch 1, bei welcher der Bereich/die Bereiche (7, 8, 9, 10) der Biegung in dem Teil der Form (1) vorgesehen ist/sind, der bei oder nahe bei dem optischen Bereich der Linse ist.

4. Linsenformvorrichtung nach Anspruch 2 oder Anspruch 3, bei welcher die Bereiche (7, 8, 9, 10) der Biegung homogen mit den Formteilen sind.

5. Linsenformvorrichtung nach Anspruch 4, bei welcher die Bereiche (7, 8, 9, 10) der Biegung auf der Oberfläche der Linsenformteile (2, 4) positioniert sind und deren Oberfläche/n entweder abgeglichen ist/sind mit dem Rest der Formoberfläche oder nicht mit der Formoberfläche fluchtet/n.

6. Linsenformvorrichtung nach Anspruch 5, bei welcher die Biegung über den/die Bereich/e (7, 8, 9, 10) der Biegung variieren kann.

7. Linsenformvorrichtung nach Anspruch 6, bei welcher der/die Bereich/e (7, 8, 9, 10) der Biegung geformt sind zur Aufnahme von Raumkurven, Anflachungen, Absenkungen, Asphären, Sphäro-Asphären oder flachen Asphären.

8. Linsenformvorrichtung nach Anspruch 7, bei welcher die Form des Bereichs/der Bereiche (7, 8, 9, 10) der Biegung die Gestalt der durch die Form hergestellten Linse, beeinflußt.

9. Linsenformvorrichtung nach Anspruch 8, bei welcher die Biegebereiche einen Linsenschwund innerhalb der Form unabhängig von den Restbereichen der Formteile (2, 4) aufnehmen.

10. Linsenformvorrichtung nach Anspruch 9, bei welcher die Bereiche (7, 8, 9, 10) der Biegung aus hochwertigem Polypropylen hergestellt sind.

11. Linsenformvorrichtung nach Anspruch 10, bei welcher die Form/en des/der Bereichs/e (7, 8, 9, 10) der Biegung die Gestalt des umfänglichen Bereiche der Linse diktieren.

12. Verfahren zum Formen einer Kontaktlinse, das die Schritte aufweist:
a) Hernehmen einer Linsenformvorrichtung, die zwei Formteile (4, 2) hat, wobei deren erster (4) eine konvexe Oberfläche (5) und deren zweiter (2) eine konkave Oberfläche (3) hat, wobei eine oder jede der konvexen und konkaven Oberflächen (5, 3) zusammen einen Hohlraum (6) ausbilden und einen Bereich oder Bereiche (7, 8, 9, 10) einer Biegungsanpassung an die Position des Flansch einer fertigen Linse, aufweist/en.
b) Einführen eines polymerisierbaren Materials in flüssigem Zustand in den Hohlraum (6);
c) dem Material zu härten erlauben, mit dem Resultat, daß das Material schwindet;
d) Halten der relativen Positionen jedes Teils (4, 2) der Form (1), derart, daß der Schwund in dem polymerisierbaren Material aufgenommen ist durch die Bereiche (7, 8, 9, 10) der Biegung in dem einen oder dem anderen Teil (4, 2) der Form; und
e) Entfernen der fertigen Linse aus der Form.

13. Verfahren nach Anspruch 12, bei welchem der/die Bereich/Bereiche (7, 8, 9, 10) der Biegung an dem Formteil (4, 2) an einem Ort ist/sind, der angepaßt ist an den umfänglichen Flanschbereich der Linse.

14. Verfahren nach Anspruch 13, bei welchem die Formteile (4, 2) in enger Aneinanderlage aneinander gehalten sind während des Formprozesses, und zwar durch Oberflächenspannung und die unmittelbare Nähe der konkaven Formwand zu der konvexen Formwand.

15. Verfahren nach Anspruch 14, bei welchem der umfängliche oder Trägerbereich der Form während der Polymerisierung erwärmt und gleichzeitig inneren Kräften unterworfen wird, die auf ihn ausgeübt werden durch den Schwund des Kontaktlinsenmaterials.

16. Verfahren nach Anspruch 15, bei welchem die Formteile (4, 2) durch Oberflächenspannung während des Formprozesses in enger Aneinanderlage aneinander gehalten werden.

## Revendications

1. Appareil de moulage pour la production d'une lentille de contact, l'appareil comportant :
un moule (1) en deux parties ayant une première surface convexe (5) de moulage d'une première partie (4) de moule et une seconde surface concave (3) de moulage d'une seconde partie (2) de moule, les deux surfaces (5, 3) définissant ensemble une cavité étanche (6) de moulage qui reçoit une matière polymérisable ;
**caractérisé en ce qu'**une ou chacune des première et seconde surfaces (5, 3) de moulage comprend une région ou des régions (7, 8, 9, 10) dans lesquelles une partie du moule est flexible afin de permettre un retrait de la matière polymérisable à l'intérieur de la cavité, mais avec un mouvement axial minimal ou nul des parties (2, 4) du moule, et dans lequel la région ou les régions (7, 8, 9, 10) est ou sont conçues pour fléchir tout en assurant qu'une épaisseur constante du bord de la lentille est maintenue dans une lentille de contact en matière polymérisée produite dans le moule (1) à partis de la matière polymérisable.

2. Appareil de moulage de lentille selon la revendication 1, dans lequel la région/les régions (7, 8, 9, 10) de flexion est/sont située(s) dans la partie du moule (1) qui se trouve dans, ou à proximité de, la zone du rebord périphérique de la lentille.

3. Appareil de moulage de lentille selon la revendication 1, dans lequel la région/les régions (7, 8, 9, 10) de flexion est/sont située(s) dans la partie du moule (1) qui se trouve dans, ou à proximité de, la région optique de la lentille.

4. Appareil de moulage de lentille selon la revendication 2 ou la revendication 3, dans lequel les régions (7, 8, 9, 10) de flexion sont homogènes avec les parties du moule.

5. Appareil de moulage de lentille selon la revendication 4, dans lequel les régions (7, 8, 9, 10) de flexion sont positionnées sur la surface des parties (2, 4) du moule de lentille et dont la surface/les surfaces est/sont soit à fleur avec la partie restante de la surface du moule, soit non en alignement avec la surface du moule.

6. Appareil de moulage de lentille selon la revendication 5, dans lequel la flexion peut varier sur la région/les régions (7, 8, 9, 10) de flexion.

7. Appareil de moulage de lentille selon la revendication 6, dans lequel la région/les régions (7, 8, 9, 10) de flexion est/sont configurée(s) pour s'adapter à des courbes sphériques, des plats, des creux, des formes asphériques, des formes sphéro-asphériques ou des formes asphériques plates.

8. Appareil de moulage de lentille selon la revendication 7, dans lequel la forme de la région/des régions (7, 8, 9, 10) de flexion a un effet sur la forme de la lentille produite à partir du moule.

9. Appareil de moulage de lentille selon la revendication 8, dans lequel les zones de flexion rattrapent le retrait de la lentille à l'intérieur du moule indépendamment des autres zones des parties (2, 4) du moule.

10. Appareil de moulage de lentille selon la revendication 9, dans lequel les régions (7, 8, 9, 10) de flexion sont fabriquées en polypropylène de haute qualité.

11. Appareil de moulage de lentille selon la revendication 10, dans lequel la forme/les formes de la région/des régions (7, 8, 9, 10) de flexion impose(nt) la forme de la zone périphérique de la lentille.

12. Procédé de moulage d'une lentille de contact, comprenant les étapes qui consistent :
a) à se procurer un appareil de moulage de lentille comportant deux parties (4, 2) de moulage, dont la première (4) présente une surface convexe (5) et la seconde (2) présente une surface concave (3), dans lequel une ou chacune des surfaces convexe et concave (5, 3) forme une cavité (6) et comprend une région ou des régions (7, 8, 9, 10) de flexion correspondant à la position du rebord d'une lentille finie ;
b) à introduire dans la cavité (6) une matière polymérisable dans un état fluide ;
c) à permettre à la matière de durcir, ce qui provoque un retrait de la matière ;
d) à maintenir les positions relatives de chaque partie (4, 2) du moule (1) afin que les régions (7, 8, 9, 10) de flexion s'adaptent au retrait de la matière polymérisable dans l'une ou l'autre des parties (4, 2) du moule ; et
e) à enlever la lentille finie du moule.

13. Procédé selon la revendication 12, dans lequel la région/les régions (7, 8, 9, 10) de flexion est/sont sur la partie (4, 2) du moule en un emplacement qui correspond à la zone du rebord périphérique de la lentille.

14. Procédé selon la revendication 13, dans lequel les parties (4, 2) du moule sont maintenues en apposition étroite l'une avec l'autre pendant le processus de moulage par une tension superficielle et la proximité étroite de la paroi concave du moule avec la paroi convexe du moule.

15. Procédé selon la revendication 14, dans lequel la zone périphérique ou porteuse du moule est chauffée pendant la polymérisation et est soumise simultanément à des forces internes exercées sur elle par le retrait de la matière de la lentille de contact.

16. Procédé selon la revendication 15, dans lequel les parties (4, 2) du moule sont maintenues en apposition étroite l'une avec l'autre pendant le processus de moulage par une tension superficielle.
